# EUROPÄISCHE PATENTSCHRIFT

(11) **EP 0 478 807 B1**
(45) Veröffentlichungstag und Bekanntmachung des Hinweises auf die Patenterteilung: **30.11.1994**
(21) Anmeldenummer: 90118710.4
(22) Anmeldetag: 28.09.1990
(51) Int. Cl.: D06F 37/30, H02H 7/085

(54) **Waschautomat mit einer Überwachung der Motortemperatur**
Washing machine with monitoring of the motor temperature
Machine à laver avec surveillance de la température du moteur

(43) Veröffentlichungstag der Anmeldung: 08.04.1992
(73) Patentinhaber: SIEMENS AKTIENGESELLSCHAFT, 80333 München (DE)
(72) Erfinder: Schach, Rainer, Dipl.-Ing., W-1000 Berlin 45 (DE); Bass, Martin, Dipl.-Ing., W-8700 Würzburg (DE); Klein, Hans-Wilhelm, Dipl.-Ing., W-8700 Würzburg (DE); Niedermeier, Karl, Dr.-Ing., W-8710 Kitzingen (DE)

(56) Entgegenhaltungen:
- EP-A- 0 090 716
- DE-A- 2 238 022
- DE-A- 2 358 638

## Beschreibung

Die Erfindung bezieht sich auf einen Waschautomat gemäß Oberbegriff des Anspruchs 1; ein derartiger Waschautomat ist allgemein bekannt.

In bekannten modernen Waschautomaten wird zur Erzielung eines gewünschten Waschergebnisses je einstellbarem Waschprogramm ein bestimmter Reversierzyklus, bestehend aus Rechtslauf, Pause, Linkslauf, Pause, usw. über eine ebenfalls je gewähltem Waschprogramm programmierte Waschzeit vorgegeben. Die im Reversierzyklus festgelegte Einschaltdauer bestimmt zusammen mit der Laufzeit des Waschprogramms einerseits sowie der Waschtrommelbeladung und dem Wasserstand in der Waschtrommel bzw. dem Laugenbehälter andererseits die Erwärmung des zum Antrieb der Waschtrommel vorgesehenen Elektromotors. Waschantriebe werden in der Regel dabei so ausgelegt, daß die in einer Norm (VDE 0730) vorgeschriebene Grenztemperatur nur unter bestimmten Umständen, wie halber Nennbeladung der Waschtrommel und hohem Wasserstand bei Spülbetrieb am Ende eines Kochwaschprogramms mit Vor- und Hauptwäsche erreicht wird.

Ausgehend von einem Waschautomaten der vorgenannten Art kann eine bessere Motorausnutzung des die Waschtrommel antreibenden Elektromotors bei kürzeren Waschprogrammlaufzeiten oder eine Verlängerung der Gesamtlebensdauer des Elektromotors bei in Kauf genommenen verlängerten Waschprogrammlaufzeiten bei gleich gutem Waschergebnis dadurch erreicht werden, daß erfindungsgemäß ein die jeweilige Motor-Temperatur des die Waschtrommel antreibenden Elektromotors erfassender Temperatursensor und ein im Sinne einer veränderbaren Gesamtwaschzeit in Abhängigkeit von der Differenz zwischen der Motor-Grenztemperatur und der jeweiligen Motor-Temperatur des Temperatursensors unterlagerten Regelkreis vorgesehen ist.

Durch den Vergleich des von dem Temperatursensor erfaßten Meßwertes der jeweiligen mittleren Temperaturerwärmung des Antriebsmotors mit einem Temperatur-Vorgabewert, z.B. der festgelegten Motor-Grenztemperatur kann die relative Einschaltdauer des Antriebsmotors ausgehend von einem durch die Hauptsteuerung aufgrund des gewählten Waschprogramms festgelegten Vorgabewertes derart verändert werden, daß der Motor-Grenztemperaturwert möglichst schnell erreicht und dann konstant gehalten werden kann. Dadurch ist bei gewährleistetem gleichgutem Waschergebnis eine Verkürzung der Gesamtwaschprogrammlaufzeit möglich.

Andererseits kann nach einer Ausgestaltung der Erfindung durch die unterlagerte Regelung auch unterhalb der Motor-Grenztemperatur gearbeitet werden, so daß bei ebenfalls gewährleistetem gleichguten Waschergebnis die Erwärmung des die Waschtrommel antreibenden Elektromotors niedriger gehalten und somit seine Gesamtlebensdauer, z.B. aufgrund geringerer Isolationsbelastung und/oder verminderten Bürstenverschleißes bei einem Kommutatormotor, verlängert werden kann.

In vorteilhafter Weise kann der Temperatursensor im Zusammenhang mit einer an sich vorhandenen Programmsteuer- bzw. Programmregelanordnung auch als Übertemperatur-Schutzschalter dadurch verwendet werden, daß bei einer über den Temperatursensor gemeldeten Übertemperatur durch die Programmsteuer- bzw. Programmregelanordnung der gesamte Waschantrieb abgeschaltet wird.

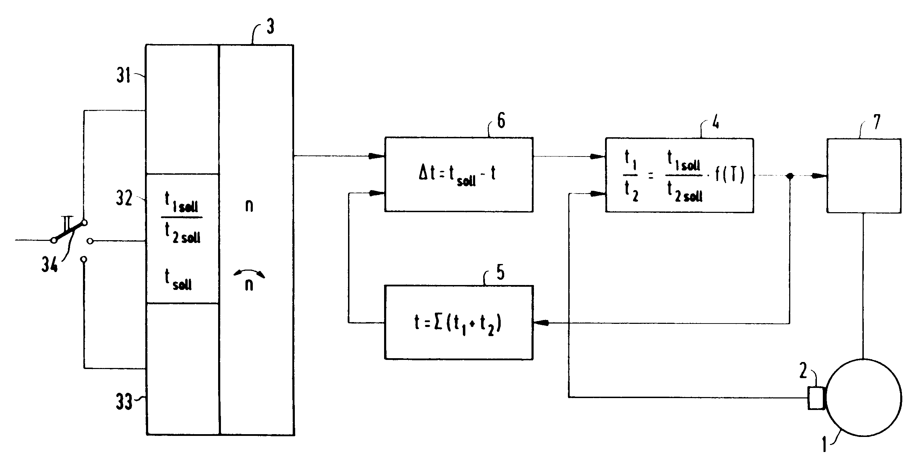

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert.

Ein die Waschtrommel eines Waschautomaten antreibender Elektromotor 1 wird gemäß der Vorgabe durch eine Programmsteueranordnung 3 je nach durch einen Programmwahlschalter 34 gewähltem Waschprogramm 31 bzw. 32 bzw. 33 in einem Hauptsteuerkreis über eine Gesamtwaschzeit tₛₒₗₗ mit einem bestimmten Reversierzyklus mit Einschaltzeiten t₁ und Ausschaltzeiten t₂ über einen Leistungssteller 7 betrieben.

Erfindungsgemäß ist ein die Motorerwärmung, insbesondere die Wicklungserwärmung der Ständerwicklung erfassender Temperatursensor 2 vorgesehen, dessen Istwerte an einen Funktionsbildner 4 gegeben werden, der in Abhängigkeit von der jeweiligen, von dem Temperatursensor 2 erfaßten Motor-Temperatur T das von der Programmsteueranordnung 3 vorgegebene Verhältnis der Soll-Einschaltzeiten t₁ ₛₒₗₗ zu den Soll-Ausschaltzeiten t₂ ₛₒₗₗ, z.B. im Sinne einer schnelleren Erreichung der Motor-Grenztemperatur T_{M} variiert. Vom Ausgang des Funktionsbildners werden die derart variierten Einschaltzeiten t₁ bzw. Ausschaltzeiten t₂ zu einem Summenbildner 5 gegeben, der die Waschzeit aus der Summe der im Funktionsbildner 4 bestimmten Einschaltzeiten t₁ und Ausschaltzeiten t₂ errechnet und an einen Differenzbildner 6 weitergibt, der die neue, in diesem Fall verkürzte, Gesamtwaschzeit ermittelt und im Rahmen des Gesamtprogrammablaufs dafür sorgt, daß die weiteren Programmpunkte, z.B. der anschließende Spül- und Schleudervorgang, früher beginnen können als eigentlich durch die Sollvorgaben der Programmsteueranordnung 3 bestimmt.

Anstelle der im vorliegenden Beispiel angenommenen Programmsteueranordnung 3 mit drei vorgebbaren und durch den Programmwahlschalter 34 auswählbaren Waschprogramm 31 bzw. 32 bzw. 33 mit Sollvorgaben für die Gesamtwaschzeit t ₛₒₗₗ bzw. die Einschaltzeiten t₁ ₛₒₗₗ und Ausschaltzeiten t₂ ₛₒₗₗ der Reversierzyklen sowie einer bestimmten Drehzahl n und einer bestimmten Drehrichtung 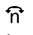 der Waschtrommel kann ohne Beeinträchtigung der erfindungsgemäßen Lösung auch eine Programmregelanordnung eingesetzt werden.

Als Temperatursensor 2 ist nach einer ersten Ausgestaltung der Erfindung ein hier nicht näher erläuterter, an sich bekannter Heißleiter vorgesehen; anstelle eines gesonderten Heißleiters kann auch in an sich bekannter Weise zur Temperaturerfassung des Elektromotors in den Pausen der Reversierzyklen der jeweilige Motorwicklungswiderstand als repräsentative Größe für den jeweiligen Erwärmungsgrad der Motorwicklung herangezogen werden.

## Patentansprüche

1. Waschautomat mit gemäß Vorgabe einer Programm-Steueranordnung (3) über eine Gesamt-Waschzeit (tₛₒₗₗ) mit bestimmten Einschaltzeiten (t₁) und Ausschaltzeiten (t₂) zyklisch reversierendem, hinsichtlich einer bestimmten Motor-Grenztemperatur (T_{M}) überwachten Elektromotor (1) zum Antrieb einer Waschtrommel, **gekennzeichnet** durch einen die jeweilige Motor-Temperatur (T) erfassenden Temperatursensor (2) und einen im Sinne einer veränderbaren Gesamtwaschzeit (t) in Abhängigkeit von der Differenz zwischen der Motor-Grenztemperatur (T_{M}) und der jeweiligen Motor-Temperatur (T) des Temperatursensors (2) unterlagerten Regelkreis.

2. Waschautomat nach Anspruch 1, **gekennzeichnet** durch einen Heißleiter als Temperatursensor (2).

3. Waschautomat nach Anspruch 1, **gekennzeichnet** durch einen in den Pausen der Reversierzyklen gemessenen Motorwicklungswiderstand als Temperatursensor (2).

4. Waschautomat nach einem der Ansprüche 1 bis 3, **gekennzeichnet** durch eine unterlagerte Regelung im Sinne einer möglichst schnellen Motorerwärmung auf die Motor-Grenztemperatur (T_{M}) mit anschließender Konstanthaltung der Motor-Grenztemperatur (T_{M}).

5. Waschautomat nach einem der Ansprüche 1 bis 3, **gekennzeichnet** durch eine unterlagerte Regelung im Sinne einer unterhalb der Motor-Grenztemperatur (T_{M}) liegenden Motorerwärmung.

6. Waschautomat nach einem der Ansprüche 1 bis 5, **dadurch gekennzeichnet,** daß der Temperatursensor (2) für eine Übertemperatur-Schutzschaltung mitvorgesehen ist.

## Claims

1. A washing machine with an electromotor (1) for driving a washing drum, which electromotor is monitored in respect of a given motor threshold temperature (T_{M}) and is reversed in cycles according to the predetermined values of a programme control device (3) over an overall wash time (tₙₒₘ) with specific switch-on times (t₁) and switch-off times (t₂), characterised by a temperature sensor (2) determining the respective motor temperature (7) and an underlying control circuit with a view towards a variable overall wash time (t) as a function of the difference between the motor threshold temperature (T_{M}) and the respective motor temperature (T) of the temperature sensor (2).

2. A washing machine according to claim 1, characterised by a semiconductor as a temperature sensor (2).

3. A washing machine according to claim 1, characterised by a motor winding resistance measured in the pauses in the reversing cycles as a temperature sensor (2).

4. A washing machine according to one of claims 1 to 3, characterised by an underlying control with a view towards as rapid as possible motor heating to the motor threshold temperature (T_{M}) with a subsequent maintenance of the motor threshold temperature (T_{M}).

5. A washing machine according to one of claims 1 to 3, characterised by an underlying control with a view towards motor heating to a temperature below the motor threshold temperature (T_{M}).

6. A washing machine according to one of claims 1 to 5, characterised in that the temperature sensor (2) is simultaneously provided for an excess temperature protective circuit.

## Revendications

1. Laveuse automatique comportant pour l'entraînement d'un tambour de laveuse un moteur électrique (1) qui effectue un mouvement réversible cyclique conformément aux instructions d'un dispositif (3) de commande de programme sur une durée globale de lavage (tₛₒₗₗ) avec des durées de marche (t₁) et d'arrêt (t₂) déterminées et dont la température limite (T_{M}) définie est surveillée, **caractérisée** par une sonde (2) de température détectant la température (T) momentanée du moteur et un circuit de régulation en cascade en vue de modifer la durée globale de lavage (t) en fonction de la différence entre la température limite (T_{M}) du moteur et la température momentanée (T) du moteur détectée par la sonde (2) de température.

2. Laveuse automatique selon la revendication 1, **caractérisée** par une thermistance constituant la sonde (2) de température .

3. Laveuse automatique selon la revendication 1, **caractérisée** par une résistance d'enroulement de moteur mesurée pendant les pauses des cycles d'inversion de sens du tambour et utilisée comme sonde (2) de température.

4. Laveuse automatique selon l'une des revendications 1 à 3, **caractérisée** par un dispositif de régulation en cascade en vue de chauffer le plus rapidement possible le moteur à la température limite (T_{M}) pour le maintenir ensuite constamment à cette température limite (T_{M}).

5. Laveuse automatique selon l'une des revendications 1 à 3, **caractérisée** par un dispositif de régulation en cascade en vue de chauffer le moteur à une température inférieure à la température limite (T_{M}) du moteur.

6. Laveuse automatique selon l'une des revendications 1 à 5, **caractérisée** par le fait que la sonde (2) de température est également prévue pour un circuit de protection contre les élévations de température.
